(19) **Europäisches Patentamt / European Patent Office / Office européen des brevets**

(11) **EP 4 070 879 A1**

(12) # EUROPEAN PATENT APPLICATION

(43) Date of publication:
**12.10.2022 Bulletin 2022/41**

(21) Application number: **21382302.4**

(22) Date of filing: **09.04.2021**

(51) International Patent Classification (IPC):
**B01D 67/00** (2006.01) **B01D 53/22** (2006.01)
**B01D 69/10** (2006.01) **B01D 69/14** (2006.01)
**B01D 71/02** (2006.01) **C22C 32/00** (2006.01)

(52) Cooperative Patent Classification (CPC):
**B01D 67/0041; B01D 53/228; B01D 67/0062;
B01D 67/0086; B01D 69/10; B01D 69/142;
B01D 71/024; C22C 32/0026;** B01D 2256/10;
B01D 2256/12; B01D 2256/16; B01D 2256/20;
B01D 2256/245; B01D 2257/504; B01D 2323/08;

(Cont.)

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicants:
• **Consejo Superior De Investigaciones Científicas (CSIC)**
**28006 Madrid (ES)**
• **Universidad De Zaragoza**
**50009 Zaragoza (ES)**

(72) Inventors:
• **Sanjuán Álvarez, María Luisa**
**50009 Zaragoza (ES)**
• **Merino Rubio, Rosa Isabel**
**50009 Zaragoza (ES)**
• **Orera Utrilla, Alodia**
**50009 Zaragoza (ES)**
• **Grima Soriano, Lorena**
**50009 Zaragoza (ES)**
• **Oliete Terraz, Patricia Beatriz**
**50009 Zaragoza (ES)**
• **Bucheli Erazo, Wilmer**
**50009 Zaragoza (ES)**

(74) Representative: **Pons**
**Glorieta Rubén Darío 4**
**28010 Madrid (ES)**

(54) **MOLTEN SALT-CERAMIC COMPOSITE MEMBRANE WITH HIGH CO2 PERMEABILITY**

(57) The invention relates to a molten salt-ceramic composite membrane, a process to obtain said composite, that comprises the etching of a fibrilar eutectic composition to produce a ceramic porous matrix and the infiltration of the matrix with molten carbonates and the use of said composite as a $CO_2$ separator, wherein the pore alignment impacts on separation performance as do support and molten-salt conductivities, membrane thickness and pore volume fraction, size, connectivity and tortuosity factor.

EP 4 070 879 A1

(52) Cooperative Patent Classification (CPC): (Cont.)
    B01D 2323/28; B01D 2323/46

## Description

The invention relates to a molten salt-ceramic composite membrane, a process to obtain said composite, that comprises the etching of a fibrilar eutectic composite to produce a ceramic porous matrix and the infiltration of the matrix with molten carbonates, and the use of said composite as a $CO_2$ separator, wherein the pore alignment impacts on separation performance as do support and molten-salt conductivities, membrane thickness and pore volume fraction, size, connectivity and tortuosity factor.

## BACKGROUND ART

The climate change and the global warming induced by greenhouse effect gases, such as $CO_2$, urge to search forms of separating the $CO_2$ emitted in industrial processes as a previous step of its storage. Among devices that may serve to such goal, supported molten-salt membranes, also known as dual membranes, have attracted interest since their appearance in 2005 [Chung et al., Ind. Eng. Chem. Res. 44, 7999 (2005)]. In these devices, selectivity to $CO_2$ is based on permeation of that gas through molten carbonates infiltrated in the pores of a support. For the case of a purely ionic ($O^{2-}$) conducting support, the conventional understanding of how these membranes work assumes that $CO_3^{2-}$ anions are formed at the feed side through a surface reaction between the $CO_2$ from the feed gas and oxide ions from the ceramic support. The $CO_3^{2-}$ anions thus formed diffuse through the molten carbonates and deliver $CO_2$ at the permeate side through the reverse reaction.

Membrane permeability depends both on intensive factors of the constituent materials, such as the support and molten salt conductivities, as on geometrical factors (membrane thickness) and support microstructural properties related to pores, such as pore diameter, tortuosity, connectivity between feed and permeate sides of the membrane, specific internal surface, contact surface between the molten salt and the atmosphere, etc. Achieving a good control of these parameters is crucial to obtain high permeability values. The relation between pore characteristics and membrane performance has been demonstrated in a number of works. In a samarium-doped ceria (SDC)-carbonate system, for instance, the conductivity increased linearly with the SDC-carbonate interfacial area, but was inversely proportional to the tortuosity factor [Y. Shilong et al., Mater. Lett. 92, 78 (2013)]. In a lanthanum strontium cobalt ferrite (LSCF)-carbonate system, permeability could be increased by decreasing either the carbonate or the solid-oxide tortuosity [J. Ortiz-Landeros et al., Chem. Eng. Sci. 104, 891 (2013)].

In membranes prepared at the laboratory scale by techniques such as isostatic pressing or tape-casting, porosity control relies upon the use of sacrificial materials as pore formers. Sacrificial materials are also used in the phase-inversion technique, currently applied to produce supports in tubular form, with the goal of obtaining dimensions closer to those required for large-scale applications. However, although a relatively good control of pore diameter and total support porosity has been achieved with these methods, an adequate control of the pore alignment in the direction of the gas transport is still lacking, especially for pore diameters in the 1-50 $\mu$m range.

## SUMMARY OF THE INVENTION

The present invention discloses a novel molten salt-ceramic composite membrane, wherein the etching of the minority phase in a fibrilar eutectic can be used to produce a membrane support with geometrical and microstructural properties difficult to achieve by other methods with a higher permeability than in the state-of-the-art values. The present invention takes benefit of the natural ordering of eutectic by crystals to produce a porous support that, after infiltration with molten carbonates, allows the $CO_2$ transport through the liquid in the form of carbonate anions. Different solidification techniques may be used to produce the parent eutectic system, basically unidirectional solidification or surface melting, providing solidified materials with different sizes and geometrical shapes. The porous support is obtained from the eutectic by crystal by dissolution of the minority phase through etching. If the parent material is a fibrilar eutectic, fibre dissolution results in a porous matrix with highly dense and well aligned parallel pores of very uniform diameter.

A first aspect of the present invention is related to a molten salt-ceramic composite membrane characterized in that it comprises

- a porous ceramic oxide support with a conductivity measured by impedance spectroscopy of between $3.5 \times 10^{-3}$ and 15 S $m^{-1}$ at a temperature of between 600 to 840 °C, wherein the porosity determined from weight loss after acid etching or X-ray tomography is between 10 and 35% and the pore diameter range measured by scanning electron microscopy (SEM) is between 0.2 to 5 $\mu$m, and wherein the tortuosity factor is between 1 and 3, and wherein the specific surface area of the support is between 0.2 y 6 $\mu m^{-1}$; and
- at least one alkali metal carbonate melted and infiltrated into the pores of the ceramic oxide support.

The term "tortuosity factor" as used herein refers to the alignment of the pores along the material. A better alignment decreases the tortuosity (the optimal value of the tortuosity factor = 1 would be reached in the ideal situation of perfect alignment) and enhances the flow of $CO_2$ through the membrane, thus improving its permeability. The micrometric diameter of the pores, as well as their high density, result in high values of both the specific surface (SS) area (internal pore surface area versus volume of the support) and the length of the TPB (triple phase boundary) reaction points, where the gas (atmosphere), liquid (molten salts) and solid (ceramic support) phases meet. Therefore, increases in TPB and SS will facilitate permeation. A high permeability value was obtained, which was attributed to the excellent pore and solid-oxide microstructural characteristics: good pore connectivity and alignment, high pore specific density and homogeneous micrometric pore size. These properties are specific to the directional-solidification preparation process and add to the properties common to supported molten-salt membranes, such as suitability for high-temperature operation and very high $CO_2/N_2$ selectivity. The specific surface area of the porous ceramic oxide support is between 0.2 y 6 $\mu m^{-1}$ and said value in accordance with the pore dimensions and porosity values of the support.

Thus, a preferred embodiment of the composite of the present invention the porous ceramic oxide support is a 1-2 mm diameter solidified rod or a 0.3 -1 mm thick eutectic plate of 1-50 $cm^2$ surface.

In other preferred embodiment of the composite of the present invention the porous ceramic oxide matrix is selected from magnesium-stabilised zirconia $Zr_{1-x}Mg_xO_{2-z}$ ($0.10 \leq x \leq 0.25$) (MgSZ), $Zr_{1-x-y}Y_xMg_yO_{2-z}$ ($x \leq 0.45$, $y \leq 0.25$), $Zr_{1-x-y}Hf_xMg_yO_{2-z}$ ($x \leq 0.45$, $y \leq 0.25$), $Zr_{1-x-y}Ce_xMg_yO_{2-z}$ ($x \leq 0.45$, $y \leq 0.25$), $Ce_{1-x-y}Sm_xMg_yO_{2-z}$ ($x \leq 0.25$, $y \leq 0.25$), $Ce_{1-x-y}Gd_xMg_yO_{2-z}$ ($x \leq 0.25$, $y \leq 0.25$), and any combination thereof.

In a further embodiment where the ceramic oxide matrix is MgSZ, the measured $CO_2$ permeability is much higher than those reported for YSZ ($Zr_{1.85}Y_{0.15}O_{1.925}$)-based supported molten-salt membranes, despite the conductivity of MgSZ being approximately one order of magnitude lower than that of YSZ. The high permeability therefore may be attributed to the improved pore characteristics: good connectivity between the feed side and the permeate side of the membrane, alignment along the permeation direction, very homogeneous pore size, high specific surface and high contact surface between the feed gas and the molten salt. The ordered pore distribution also reduces the ceramic support tortuosity factor.

In other preferred embodiment, the molten salt infiltrated in the porous ceramic matrix is a mixture of $Li_2CO_3$, $Na_2CO_3$ and $K_2CO_3$ carbonates, preferably in the ternary eutectic proportion of 42.5/32.5/25 mol% respectively. Using this carbonate proportion, the melting temperature of the carbonate mixture is lowered to T~400 ºC. Single or binary carbonate mixtures can also be used, with higher melting temperatures (T $\geq$ 490 ºC).

A second aspect of the present invention is a process to obtain the composite described above characterized in that it comprises the following steps

a) mixing a combination of inorganic oxides with a eutectic composition, and sintering at a temperature up to 1600 ºC;
b) melting the mixture obtained in step (a) at a temperature between 1800 and 2500 °C, followed by solidification at a controlled rate of between 1 and 500 mm/h and cooling to a temperature between 10 ºC and 30 ºC;
c) immersing the product obtained in step (b) into a solution of an acid selected from HCl, $H_2SO_4$, $HNO_3$ and acetic acid in distilled water at a temperature of between 10 ºC and 90 °C for a time of between 10 and 500 h; and
d) depositing in compacted powder form at least an alkali metal carbonate on top of the support material obtained in step (c) and heating above the melting temperature of the alkali-metal carbonate or carbonate mixture so that the carbonates infiltrate the pores of the support.

The term "eutectic composition" as used herein refers to a mixture of compounds at a proportion corresponding to an invariant point in the composition-temperature phase diagram in which a homogenous liquid is in equilibrium with two (or more) crystalline solid phases.

The term "eutectic temperature" as used herein refers to the temperature corresponding to an invariant point in the composition-temperature phase diagram of a mixture of compounds at which a homogenous liquid is in equilibrium with two (or more) crystalline solid phases.

With respect to the mixture of oxides referred to herein, the phases are considered to be oxides with fixed stoichiometry, and the solidification is performed by cooling the molten mixture (with "eutectic composition") below its melting point (the "eutectic temperature") to generate simultaneously the two solid oxides. More loosely, the terms "eutectic composition" and "eutectic temperature" are used herein also to refer to compositions that might involve also a third (or more) component oxide and that allows the homogenous and coupled growth of two solid phases by cooling a liquid directionally below its melting temperature. The extra component will in this case incorporate in one or both phases forming solid solutions.

With respect to carbonate mixtures, the eutectic composition is one preferred composition herein as it is the one that gives the minimum melting temperature of mixtures of the selected carbonates.

In a preferred embodiment of the process of the present invention, the mixture of a combination of inorganic oxides of step (a) comprises a first oxide selected from $ZrO_2$, $Y_2O_3$, $HfO_2$, $CeO_2$, $Ce_2O_3$, $Sm_2O_3$, $Gd_2O_3$, YSZ and a combination thereof, and a second oxide selected from MgO, NiO, CoO or a combination thereof, wherein the proportion between the first and second oxide is between 40:60 to 60:40 respectively and it corresponds to the eutectic composition $\pm$ 10 mol%.

In a further preferred embodiment the combination of inorganic oxides in step (a) are zirconium oxide ($ZrO_2$) and magnesium oxide (MgO), wherein the mixture is 47:53 mol% $ZrO_2$:MgO. In an even further preferred embodiment, the sintering temperature of step (a) is between 1450 ºC and 1550 ºC.

In another further preferred embodiment the combination of inorganic in step (a) oxides are yttria-stabilized zirconia (YSZ) and magnesium oxide (MgO), wherein the mixture is 49:51 mol% YSZ:MgO.

In another further preferred embodiment the combination of inorganic oxides in step (a) are $Ce_{0.5}Zr_{0.5}O_2$ (CZO) and magnesium oxide (MgO) wherein the mixture is 52:48 mol% CZO:MgO.

In another preferred embodiment of the process of the present invention the melting of step (b) of the mixture of oxides is produced by a technique selected from laser assisted directional solidification (LFZ) and laser assisted surface melting and solidification.

In another further preferred embodiment, the combination of inorganic oxides in step (a) are $ZrO_2$ and magnesium oxide (MgO), wherein the mixture is 47:53 mol% $ZrO_2$-MgO and the melting of step (b) of the mixture of oxides is produced by laser-assisted directional solidification. Said method resulting in 1-2 mm diameter solidified rods.

In another preferred embodiment, the combination of inorganic oxides in step (a) are $ZrO_2$ and magnesium oxide (MgO), wherein the mixture is 47:53mol% $ZrO_2$-MgO and the melting of step (b) of the mixture of oxides is produced by laser-assisted surface melting and solidification. Said method resulting in 0.3 -1 mm thick eutectic plates of 1-50 $cm^2$ surface.

A third aspect of the present invention relates to the use of the composite described above as a $CO_2$ separator at a temperature of between 550 ºC and 900 ºC, preferably the temperature is between 600 and 750 ºC. At said temperature carbonate or support reactivity are avoided. This is also an adequate temperature range for industrial processes.

A fourth aspect of the present invention is a membrane system characterized in that it comprises a plurality of the molten salt-ceramic composite membranes described above located laterally adjacent to each other.

In a preferably embodiment of the membrane system each molten salt-ceramic composite membrane is a rod wherein said rod has a diameter of between 1 mm and 2 mm, and a thickness of between 0.5 mm and 2 mm. In another preferred embodiment each molten salt-ceramic composite membrane is a flat disk wherein said flat disk has a thickness of between 0.3 mm and 1 mm and 1-50 $cm^2$ surface.

In a preferably embodiment of the membrane system each composite is glued to each other with ceramic cement.

In a preferred embodiment of the system of the present invention it comprises seven molten salt-ceramic composite membranes, wherein membranes are inserted into circular holes which are laser-drilled in a 500 $\mu$m-thick YSZ ceramic plate. Said ceramic cement is used to secure the rods within the plate, for mechanical stability. The ceramic cement covers all the YSZ plate surface around the membranes.

A fifth aspect of the present invention is a procedure to use the system described above in the present invention characterized in that it comprises the following steps

    i. attaching the membrane described above to a gas outlet conduction, preferably a flue gas exit conduction; and
    ii. feeding a gas flow through the membrane of step i) of at least of 20 ml.min$^{-1}$, wherein said gas comprises at least $CO_2$, with at least other gas selected from $N_2$, $H_2$, CO, $H_2O$, $SO_x$, $NO_x$, $O_2$, $CH_4$, $NH_3$ and any combination thereof, at a temperature of between 550 ºC and 850 ºC, preferably the temperature is between 600 and 750 ºC.

Unless otherwise defined, all technical and scientific terms used herein have the same meaning as commonly understood by one of ordinary skilled in the art to which this invention belongs. Methods and materials similar or equivalent to those described herein can be used in the practice of the present invention. Throughout the description and claims the word "comprise" and its variations are not intended to exclude other technical features, additives, components, or steps. Additional objects, advantages and features of the invention will become apparent to those skilled in the art upon examination of the description or may be learned by practice of the invention. The following examples and drawings are provided by way of illustration and are not intended to be limiting of the present invention.

## BRIEF DESCRIPTION OF THE DRAWINGS

**Fig. 1.** $ZrO_2$-MgO phase diagram.

**Fig. 2.** Electron micrograph of the transverse section (perpendicular to the growth axis) of an MgSZ-MgO eutectic solidified at 25 mm.h$^{-1}$ after etching, depicting an array of micrometric pores (dark grayscale) embedded into the ceramic matrix.

**Fig. 3.** Schematics of the etching and infiltration steps applied to the as-grown MgSZ-MgO eutectic rods.

**Fig. 4.** Electron micrograph of the transverse section (perpendicular to the growth axis) of the eutectic of the YSZ:MgO system solidified at 25 mm.h$^{-1}$, depicting an array of micrometric fibres (dark grayscale) embedded into the ceramic matrix.

**Fig. 5.** Electron micrograph of the transverse section (perpendicular to the growth axis) of the eutectic of the CZO:MgO system solidified at 25 mm.h$^{-1}$, depicting an array of micrometric fibres (dark grayscale) embedded into the ceramic matrix.

**Fig. 6.** Total electrical conductivity of the MgSZ porous matrix infiltrated with carbonates (1, circles) and MgSZ-MgO as grown eutectic (2, squares). The arrow 3 indicates the melting temperature of the eutectic mixture of Li, Na and K carbonates.

**Fig. 7.** Arrangement of seven infiltrated transverse rod portions forming the membrane to be used in the permeation experiment. For the permeation experiments, carbonates were infiltrated after the seven etched rods were pasted to the support.

**Fig. 8.** $CO_2$ and $O_2$ permeabilities of the membrane prepared by infiltrating the mixture of Li, Na, K carbonates with ternary eutectic composition into the porous MgSZ matrix obtained from the MgSZ-MgO fibrilar eutectic after etching the MgO phase.

**Examples**

**Example 1**

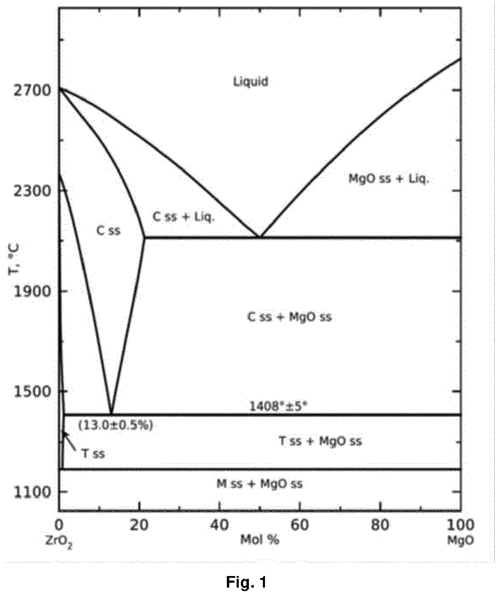

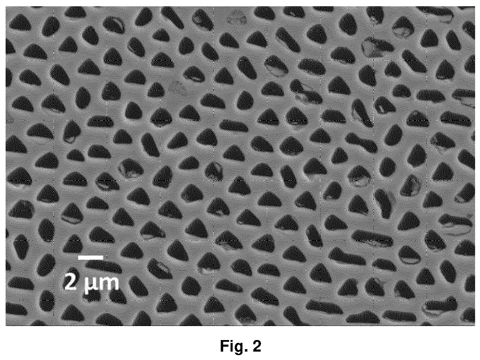

Rods of 47:53 mol% $ZrO_2$:MgO, according to the $ZrO_2$-MgO phase diagram (Figure 1 [Phase Equilibria Diagrams Online Database (NIST Standard Reference Database 31), The American Ceramic Society and the National Institute of Standards and Technology, 2020. Figure Number Zr-076-A, Y. Yin and B. B. Argent, J. Phase Equilib., 14 [4] 439-450 (1993).]), were directionally solidified using the laser floating zone (LFZ) method, where a drop of a sample is melted by focussing a high-power $CO_2$ laser on a small volume of the feedstock material as it moves vertically. To prepare the feedstock rods, commercial powders of $ZrO_2$ (Aldrich, 99%) and MgO (Alfa Aesar, 99.99%) were mixed in the appropriate amount, isostatically pressed for 3 min at 200 MPa and sintered at 1500 °C for 12 h in an open furnace. Rods of -80 mm length were melted and solidified in air using 80-100 W of a $CO_2$ laser as a heating source at rates varying between 10 and 100 mm.h$^{-1}$. The diameters of the solidified rods were between 1.2 and 1.5 mm. At the eutectic temperature the liquid crystallizes in the form of a quasi-hexagonal lattice of micron-sized MgO fibres embedded within a magnesium-stabilised zirconia (MgSZ) cubic phase with ~20% $Mg^{2+}$ content (Figure 2).

Sections of the rods were acid-etched by immersion in a 1 M solution of HCl in distilled water at 60 °C. The degree of etching was determined from the weight loss of the sample relative to the weight proportion of the MgO fibres in the MgSZ-MgO eutectic. MgO weight losses between 80 and 90% were achieved after acid treatments of at least 20 days, resulting in a support porosity in the 22 to 27% range.

X-ray nano-CT of a 32,100 $\mu m^3$ sample volume of the porous matrix resulting from etching yielded a 20.5% of open porosity with pores aligned along the growth direction and with misalignment in perpendicular directions smaller than 10º. More than 76% of the open pores percolated from one side of the membrane to the other side. The volume-specific internal surface area was -0.8 $\mu m^{-1}$ for the percolating pores, which is in agreement with the value expected from the geometrical parameters of the parent eutectic microstructure. The slight pore misalignment found in tomography experiments is attributed to the curvature of the solidification front during melting. For typical support diameters and thicknesses above ~1 mm misalignment may result in a significant reduction of the proportion of pores percolating between both sides of the membrane. Therefore, the supports must be as thin as possible.

**Example 2**

Infiltration of the carbonates into the porous matrix obtained in example 1.

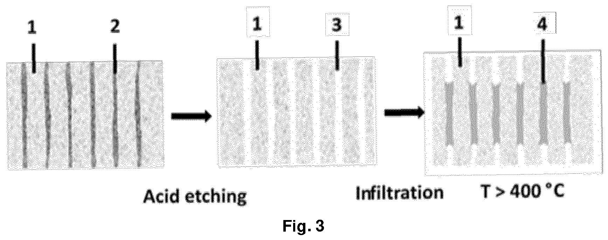

For that purpose, a mixture of $Li_2CO_3$, $Na_2CO_3$ and $K_2CO_3$ carbonates in the ternary eutectic proportion (42.5/32.5/25 mol%, respectively) (4) was deposited in compacted powder form on top of the MgSZ (1) porous sample obtained in example 1 after the etching step of the MgO (2), and heated above the eutectic temperature of the carbonate mixture (397 °C) to allow the carbonates (4) to melt and infiltrate the pores (3) by capillarity so as to obtain a molten salt-ceramic composite membrane. A scheme of the last two steps is shown in Figure 3.

**Example 3**

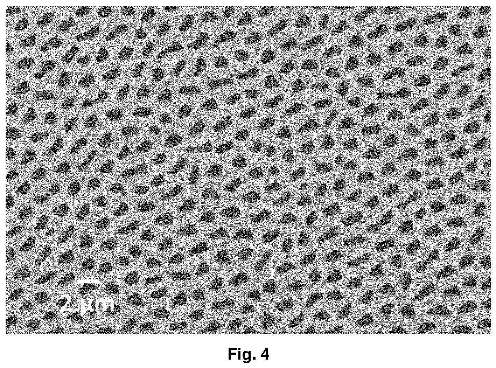

Rods of 49:51 mol% YSZ:MgO composition were directionally solidified using the laser floating zone (LFZ) method at a growth rate of 25 mm.h$^{-1}$, in the same manner as in Example 1, using commercial powders of $ZrO_2$ (Aldrich, 99%), $Y_2O_3$ (Aldrich, 99.99%) and MgO (Alfa Aesar, 99.99%) as reactants to prepare the feedstock material. The diameters of the solidified rods were between 1.2 and 1.5 mm and the eutectic microstructure consisted of MgO fibres embedded in a YSZ(Mg) matrix (Figure 4).

**Example 4**

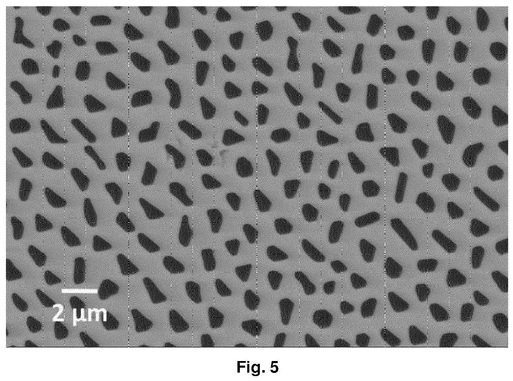

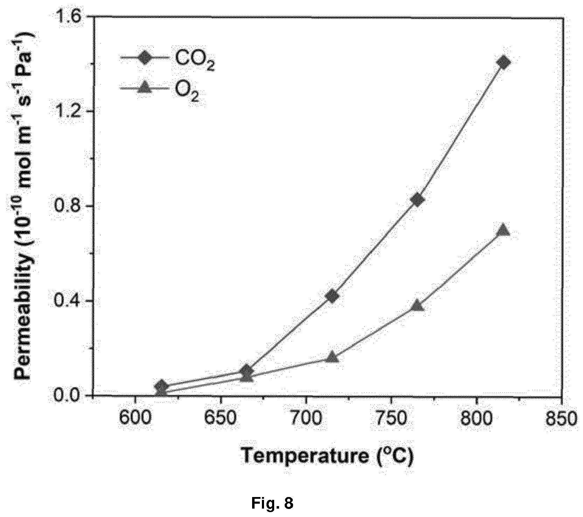

Rods of 52:48 mol% CZO:MgO composition (Figure 8), were directionally solidified using the laser floating zone (LFZ) method at a growth rate of 25 mm.h$^{-1}$, in the same manner as in Example 1, using commercial powders of $ZrO_2$ (Aldrich, 99%), $CeO_2$ (Aldrich, 99.9%) and MgO (Alfa Aesar, 99.99%) as reactants to prepare the feedstock material. The diameters of the solidified rods were between 1.2 and 1.5 mm and the eutectic microstructure consisted of MgO fibres embedded in a $Ce_{0.5}Zr_{0.5}O_2$(Mg) matrix (Figure 5).

**Example** 5

According to the equation of the effective ambipolar conductivity:

$$\sigma_{\text{eff}} = \frac{[(\varphi/\tau)_{\text{c}}\sigma_{\text{c}}][(\varphi/\tau)_{\text{so}}\sigma_{\text{so}}]}{[(\varphi/\tau)_{\text{c}}\sigma_{\text{c}}] + [(\varphi/\tau)_{\text{so}}\sigma_{\text{so}}]},$$

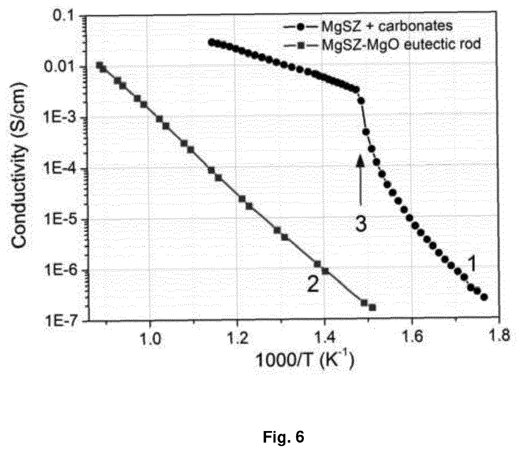

where $\sigma_{\text{c}}$, $(\varphi/\tau)_{\text{c}}$ and $\sigma_{\text{so}}$, $(\varphi/\tau)_{\text{so}}$ are the conductivity and volume-fraction-to-tortuosity-factor ratio of carbonate and solid oxide phases, respectively, the conductivity of both the solid and molten carbonate phases impact performance. Therefore, Figure 6 shows the total electrical conductivity of the carbonate-infiltrated MgSZ rod (blue triangles) and MgSZ-MgO eutectic sample (green squares), obtained from impedance spectroscopy measurements up to 600 °C (for carbonate infiltrated MgSZ) or 850 °C (for MgSZ-MgO eutectic).

The conductivity observed for the MgSZ-MgO eutectic is identical to the one reported in [R.I. Merino et al., Solid State Ionics 100, 313 (1997)]. The conductivity of the sample infiltrated with carbonates increased at the carbonate melting temperature (~400 °C), as expected [H. Näfe, Conductivity of Alkali Carbonates, Carbonate-Based Composite Electrolytes and IT-SOFC, ECS J. Solid State Science and Technology 3 (2014) N7-N14].

**Example 6**

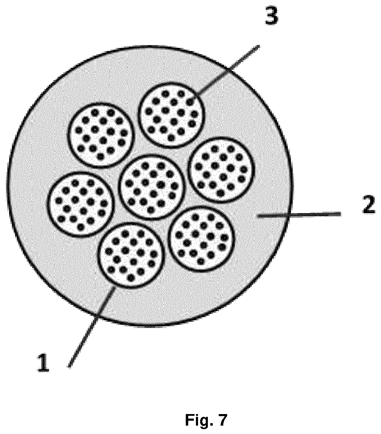

As-grown rods were ~1.5 mm diameter and -80 mm long. Each rod was cut into ~2 mm-long slices that were acid etched for ≥20 days to dissolve the MgO fibres. To increase the effective membrane surface area, in a particular example that can be seen in Figure 7 seven MgSZ porous slices (1) were inserted into circular holes drilled on a 500 μm-thick YSZ ceramic plate (2). Ceramabond 885 was used to secure the rods within the plate.

The support assembly formed by the seven etched rods was pasted to a 11-mm-diameter, 250-mm-long YSZ tube. A pellet of pressed carbonate powders was deposited on top of the support (3), then the tube was inserted into the membrane reactor, which was placed inside the furnace. The temperature was first increased from room temperature to 495 °C at 1 °C.min$^{-1}$ under 30 ml.min$^{-1}$ flow of composition 50%$CO_2$/25%$N_2$/25%$O_2$, both at the feed and permeate side inlets. Then, the sweep gas was switched to 30 ml.min$^{-1}$ of high-purity Ar and the temperature was increased first to 565 °C and then from 565 to 815 °C in steps of 50 °C, with 7 or 10 h of holding time at each temperature step and 1 °C.min$^{-1}$ ramp between steps. The outlet permeate-side gases were analysed using a mass spectrometer and an IR analyser.

**Example 7**

Permeability example. The table lists the $CO_2$ permeabilities obtained for a membrane using a porous MgSZ support obtained through the procedure described in Example 1. The high temperature $CO_2$ permeability was measured in a membrane reactor operated at atmospheric pressure, following the procedure described in Example 6.

| Sample | support material | T (°C) | Permeability mol.m$^{-1}$.s$^{-1}$.Pa$^{-1}$ |
|---|---|---|---|
| Example 1-2-6 Product | MgSZ | 815 | 1.41 x 10$^{-10}$ |
| Example 1-2-6 Product | MgSZ | 765 | 8.33 x 10$^{-11}$ |
| Example 1-2-6 Product | MgSZ | 665 | 1.06 x10$^{-11}$ |

**Example 8**

Figure 8 shows the $CO_2$ ($P_{CO2}$) and $O_2$ ($P_{O2}$) permeabilities obtained from the measured fluxes ($J_{CO2}$ and $J_{O2}$) through the expression $P = J_i.t/(p_i-p_o)$, where $t$ is the membrane thickness and p, $p_o$ are the $CO_2$ or $O_2$ partial pressures at the feed and permeate sides, respectively. The $CO_2$ permeability is 0.83x10$^{-10}$ mol.m$^{-1}$.s$^{-1}$.Pa$^{-1}$ at 765 °C and 1.41 x 10$^{-10}$ mol.m$^{-1}$.s$^{-1}$.Pa$^{-1}$ at 815 °C, much higher than in ceramic membranes based on YSZ as ionic conducting phase (~10$^{-11}$ mol.m$^{-1}$.s$^{-1}$.Pa$^{-1}$ at 850 °C in [Wade et al., J. Membr. Sci. 369, 20 (2011)] and 7.69 x 10$^{-13}$ mol.m$^{-1}$.s$^{-1}$.Pa$^{-1}$ at 650 ºC [Lu et al., J. Membr. Sci. 444, 402 (2013)]), despite the lower conductivity of MgSZ compared to YSZ.

**Example 9**

Comparative example of the permeability obtained with the present invention and permeability values reported in the literature.

| Reference | Support material | T (°C) | Permeability mol.m$^{-1}$.s$^{-1}$.Pa$^{-1}$ |
|---|---|---|---|
| Wade et al., J. Membr. Sci. 369, 20 (2011) | YSZ | 850 | 9 x 10$^{-12}$ |
| Lu et al., J. Membr. Sci. 444, 402 (2013) | YSZ | 650 | 7.69x10$^{-13}$ |
| Example 1-2-6 Product | MgSZ | 815 | 1.41 x 10$^{-10}$ |
| Example 1-2-6 Product | MgSZ | 765 | 8.33 x 10$^{-11}$ |
| Example 1-2-6 Product | MgSZ | 665 | 1.06 x10$^{-11}$ |
| Gili et al., Membranes 9, 108 (2019) | SDC | 900 | 7.59 x 10$^{-11}$ |
|  | SDC:Fe | 900 | 1.31 x10$^{-10}$ |
| Norton et al., J. Membr. Sci. 467, 244 (2014) | SDC | 900 | 1.52 x10$^{-10}$ |
| Dong et al., J. Membr. Sci. 564, 73 (2018) | SDC | 900 | 3.79×10$^{-11}$ |
| Chen et al., J. Membr. Sci. 597, 117770 (2020) | SDC | 700 | 1.06 x 10$^{-10}$ |

This table shows that the permeability values obtained with the membrane object of the present invention (example 1-2-6) are much higher than those obtained with YSZ supports, and are similar to the best values obtained with supports of SDC, a material with even higher conductivity than YSZ in the 600-900 ºC temperature range.

**Example 10**

Plate-shaped porous MgSZ, with micron-sized pores connected to the outer faces, with larger macroscopic dimensions than the ones we can achieve with the currently available LFZ technique, can be prepared by the procedure of surface laser melting. Ceramic prisms with the composition 47:53 mol% $ZrO_2$:MgO, according to the $ZrO_2$-MgO phase diagram (Figure 1), were pressed and then sintered at ~1500 ºC. The size of the prisms was ~10 x 20 x 2 mm$^3$. Then, the sample was subjected to surface melting and solidification using a $CO_2$ laser. The procedure is similar to the one used in reference [J. Gurauskis, et al. "Laser-assisted, crack-free surface meeting of large eutectic ceramic bodies". J. Europ. Ceram. Soc 31 (2011) 1251. DOI:10.1016/j.jeurceramsoc.2010.08.017]. In the present case the preheating was between 1200 and 1500 ºC and the sample travelling rate was comprised between 50 and 150 mm h$^{-1}$. The laser power was adjusted to form a molten pool with a depth of ~1 mm.

After cooling and extraction from the furnace, the unmelted part of the sample was removed by cutting, lapping and polishing. The upper part was also lapped and polished. Finally, a slice of around 0.5 mm depth was obtained, with approximate transverse dimensions of 8 x 4 mm$^2$. This piece was acid-etched by immersion in a 1M solution of HCl in

distilled water at 60 ºC. The total sample weight loss was 21%, indicative of full MgO dissolution.

**Claims**

1. Molten salt-ceramic composite membrane **characterized in that** it comprises

   • a porous ceramic oxide support with a conductivity measured by impedance spectroscopy of between $3.5 \times 10^{-3}$ and 15 S m$^{-1}$ at a temperature of between 600 to 840 °C, wherein the porosity determined from weight loss after acid etching or X-ray tomography is between 10 and 35% and the pore diameter range measured by scanning electron microscopy is between 0.2 to 5 μm, and wherein the tortuosity factor is between 1 and 3, and wherein the specific surface area of the support is between 0.2 and 6 μm$^{-1}$; and
   • at least one alkali metal carbonate melted and infiltrated into the pores of the ceramic oxide support.

2. Composite according to claim 1, wherein porous ceramic oxide support is a 1-2 mm diameter solidified rod or a 0.3 -1 mm thick eutectic plate of 1-50 cm$^2$ surface.

3. Composite according to any of claim 1 or 2, wherein the porous ceramic oxide matrix is selected from $Zr_{1-x}Mg_xO_{2-z}$ ($0.10 \le x \le 0.25$), $Zr_{1-x-y}Y_xMg_yO_{2-z}$ ($x \le 0.45$, $y \le 0.25$), $Zr_{1-x-y}Hf_xMg_yO_{2-z}$ ($x \le 0.45$, $y \le 0.25$), $Zr_{1-x-y}Ce_xMg_yO_{2-z}$ ($x \le 0.45$, $y \le 0.25$), $Ce_{1-x-y}Sm_xMg_yO_{2-z}$ ($x \le 0.25$, $y \le 0.25$), $Ce_{1-x-y}Gd_xMg_yO_{2-z}$ ($x \le 0.25$, $y \le 0.25$), and any combination thereof.

4. Composite according to any of claims 1 to 3, wherein the alkali metal carbonate melted is a mixture of $Li_2CO_3$, $Na_2CO_3$ and $K_2CO_3$, preferably in the ternary eutectic proportion of 42.5/32.5/25 mol% respectively.

5. The process to obtain the composite according to claims 1 to 4, **characterized in that** it comprises the following steps

   a) mixing a combination of inorganic oxides with a eutectic composition, and sintering at a temperature up to 1600 ºC;
   b) melting the mixture obtained in step (a) at a temperature between 1800 and 2500 °C, followed by solidification at a controlled rate of between 1 and 500 mm/h and cooling to a temperature between 10 ºC and 30 ºC;
   c) immersing the product obtained in step (b) into a solution of an acid selected from HCl, $H_2SO_4$, $HNO_3$ and acetic acid in distilled water at a temperature of between 10 ºC and 90 °C for a time of between 10 and 500 h; and
   d) depositing in compacted powder form at least an alkali metal carbonate on top of the support material obtained in step (c) and heating above the melting temperature of the alkali-metal carbonate or carbonate mixture so that the carbonates infiltrate the pores of the support.

6. Process according to claim 5, wherein the mixture of a combination of inorganic oxides of step (a) comprises a first oxide selected from $ZrO_2$, $Y_2O_3$, $HfO_2$, $CeO_2$, $Ce_2O_3$, $Sm_2O_3$, $Gd_2O_3$, YSZ and any combination thereof, and a second oxide selected from MgO, NiO, CoO or a combination thereof, wherein the proportion between the first and second oxide is between 40:60 to 60:40 respectively and it corresponds to the eutectic composition $\pm$ 10 mol%.

7. Process according to claim 5, wherein the combination of inorganic oxides are selected from zirconium oxide ($ZrO_2$) and magnesium oxide (MgO), wherein the mixture is 47:53 mol% $ZrO_2$:MgO or YSZ and MgO in proportion 49:51 mol% YSZ:MgO or are $Ce_{0.5}Zr_{0.5}O_2$ (CZO) and MgO in proportion 52:48 mol% CZO:MgO.

8. Process according to any of claims 5 to 7, wherein the melting of step (b) of the mixture of oxides is produced by a technique selected from laser assisted directional solidification (LFZ) and laser assisted surface melting and solidification.

9. Process according to claim 8, wherein the combination of inorganic oxides in step (a) are zirconium oxide and magnesium oxide (MgO), wherein the mixture is 47:53 mol% $ZrO_2$-MgO and the melting of step (b) of the mixture of oxides is produced by laser assisted directional solidification.

10. Process according to claim 8, wherein the combination of inorganic oxides in step (a) are zirconium oxide and magnesium oxide (MgO), wherein the mixture is 47:53 mol% $ZrO_2$-MgO and the melting of step (b) of the mixture of oxides is produced by laser assisted surface melting and solidification.

**11.** Use of the composite according to any of claims 1 to 4 as a $CO_2$ separator at a temperature of between 550 ºC and 900 ºC.

**12.** A membrane system **characterized in that** it comprises a plurality of the molten salt-ceramic composite membranes according to any claims 1 to 4 located laterally adjacent to each other and each composite is glued to each other with ceramic cement.

**13.** Membrane system according to claim 12, wherein each molten salt-ceramic composite membrane is a rod wherein said rod has a diameter of between 1 mm and 2 mm, and a thickness of between 0.5 mm and 2 mm or each molten salt-ceramic composite membrane is a flat disk wherein said flat disk has a thickness of between 0.3 mm and 1 mm and 1-50 cm$^2$ surface.

**14.** Membrane system according to any claims 12 to 13, comprising seven molten salt-ceramic composite membranes, wherein membranes are inserted into circular holes which are laser-drilled in a 500 $\mu$m-thick YSZ ceramic plate.

**15.** A procedure to use the membrane system to claims 12 to 14 **characterized in that** it comprises the following steps

i. attaching the membrane of claims 1 to 4 to a gas outlet conduction, preferably a flue gas exit conduction; and
ii. feeding a gas flow through the membrane of step i) of at least of 20 ml.min-1, wherein said gas comprises at least $CO_2$, with at least other gas selected from $N_2$, $H_2$, CO, $H_2O$, $SO_x$, $NO_x$, $O_2$, $CH_4$, $NH_3$ and any combination thereof, at a temperature of between 550 ºC and 850 ºC, preferably the temperature is between 600 and 750 ºC.

**Fig. 1**

Fig. 2

Acid etching       Infiltration     T > 400 °C

**Fig. 3**

Fig. 4

Fig. 5

**Fig. 6**

Fig. 7

Fig. 8

Europäisches
Patentamt

European
Patent Office

Office européen
des brevets

# EUROPEAN SEARCH REPORT

Application Number

EP 21 38 2302

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | GRIMA L. ET AL: "High CO2 permeability in supported molten-salt membranes with highly dense and aligned pores produced by directional solidification", JOURNAL OF MEMBRANE SCIENCE, [Online] vol. 630, 12 January 2021 (2021-01-12), page 119057, XP055834038, NL ISSN: 0376-7388, DOI: 10.1016/j.memsci.2021.119057 Retrieved from the Internet: URL:https://reader.elsevier.com/reader/sd/pii/S0376738821000107?token=A0A999E557292088B24A4A95685232467A2BE969F8FCC951AE9EEC1FFD8E74CF23F9362C4258557D2294C9755B0F4742&originRegion=eu-west-1&originCreation=20210824064549> [retrieved on 2021-08-23] | 1-15 | INV. B01D67/00 B01D53/22 B01D69/10 B01D69/14 B01D71/02 C22C32/00 |
| Y | * abstract * * Section 2, 3, 4, 5; figures 5,6,7,8 * ----- | 10 | |
| X | Grima, L et al.: "High CO2 permeability in supported molten-salt membranes with highly dense and aligned pores produced by directional solidification: Supplementary Information", Database J. Phase Equilib, 12 January 2021 (2021-01-12), pages 439-450, XP055834078, Retrieved from the Internet: URL:https://ars.els-cdn.com/content/image/1-s2.0-S0376738821000107-mmc1.pdf [retrieved on 2021-08-23] * figures 1-8 * ----- | 1-15 | TECHNICAL FIELDS SEARCHED (IPC) B01D C22C |

-/--

The present search report has been drawn up for all claims

| Place of search | Date of completion of the search | Examiner |
|---|---|---|
| Munich | 23 September 2021 | Williams, Jennifer |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

# EUROPEAN SEARCH REPORT

Application Number

EP 21 38 2302

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y,D | GURAUSKIS J ET AL: "Laser-assisted, crack-free surface melting of large eutectic ceramic bodies", JOURNAL OF THE EUROPEAN CERAMIC SOCIETY, vol. 31, no. 7, 15 September 2010 (2010-09-15), pages 1251-1256, XP028186948, ISSN: 0955-2219, DOI: 10.1016/J.JEURCERAMSOC.2010.08.017 [retrieved on 2010-08-19] * Section 2 * | 10 | |

TECHNICAL FIELDS
SEARCHED      (IPC)

The present search report has been drawn up for all claims

| Place of search | Date of completion of the search | Examiner |
|---|---|---|
| Munich | 23 September 2021 | Williams, Jennifer |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **CHUNG et al.** *Ind. Eng. Chem. Res.,* 2005, vol. 44, 7999
- **Y. SHILONG et al.** *Mater. Lett.,* 2013, vol. 92, 78
- **J. ORTIZ-LANDEROS et al.** *Chem. Eng. Sci.,* 2013, vol. 104, 891
- Phase Equilibria Diagrams Online Database (NIST Standard Reference Database. American Ceramic Society and the National Institute of Standards and Technology, 2020, vol. 31
- **Y. YIN ; B. B. ARGENT.** *J. Phase Equilib.,* 1993, vol. 14 (4), 439-450
- **R.I. MERINO et al.** *Solid State Ionics,* 1997, vol. 100, 313
- **H. NÄFE.** Conductivity of Alkali Carbonates, Carbonate-Based Composite Electrolytes and IT-SOFC. *ECS J. Solid State Science and Technology,* 2014, vol. 3, N7-N14
- **WADE et al.** *J. Membr. Sci.,* 2011, vol. 369 (20
- **LU et al.** *J. Membr. Sci.,* 2013, vol. 444, 402
- **GILI et al.** *Membranes,* 2019, vol. 9, 108
- **NORTON et al.** *J. Membr. Sci.,* 2014, vol. 467, 244
- **DONG et al.** *J. Membr. Sci.,* 2018, vol. 564, 73
- **CHEN et al.** *J. Membr. Sci.,* 2020, vol. 597, 117770
- **J. GURAUSKIS et al.** Laser-assisted, crack-free surface meeting of large eutectic ceramic bodies. *J. Europ. Ceram. Soc,* 2011, vol. 31, 1251